# EUROPEAN PATENT APPLICATION

(11) **EP 4 700 562 A1**
(43) Date of publication of application: **25.02.2026**
(21) Application number: 25195062.2
(22) Date of filing: 11.08.2025
(51) Int. Cl.: G06F 3/12, G06N 3/0475

(54) **STORAGE MEDIUM, INFORMATION PROCESSING APPARATUS, AND METHOD**

(30) Priority: 19.08.2024 JP 2024137858
(71) Applicant: Canon Kabushiki Kaisha, Tokyo, 146-8501 (JP)
(72) Inventor: OGAWA, Nobuhiro, Tokyo, 146-8501 (JP); TANIBE, Ryuya, Tokyo, 146-8501 (JP)
(74) Representative: TBK

(57) **Abstract**

The disclosure is directed to a non-transitory computer-readable storage medium storing a computer program that causes a computer of an information processing apparatus to function to: receive natural language related to a print setting; acquire a print setting by inputting the received natural language and a print target to generative Al; propose a print setting based on the acquired print setting; and update a print setting in response to a response to the proposal.

## Description

### TECHNICAL FIELD

The present disclosure relates to a computer program that prints a document via generative Al, an information processing apparatus, and a method.

### BACKGROUND

When printing a document, it is possible to designate and print a part of the document that one wants to print. For example, for documents that explain a specific topic in an orderly manner such as manuals and papers, it is possible to designate and print a procedure that one wants to reference or a part that one wants to correct. Further, for documents in which various kinds of information are compiled and presented such as catalogs and various kinds of declaration forms, it is possible to print a page on which desired information is presented. At that time, a user scrolls through the pages and searches within the document on the print preview screen to find the part they want to print and designates it as the print target. Then, settings related to a print format such as sheet size and layout are made, and printing is executed. As a result, the part of the document that one wants to print can be printed in the desired output.

In recent years, generative Al such as Stable Diffusion (https://stability.ai/), ChatGPT (https://chat.openai.com/), and generative adversarial networks (GANs) are gaining interest. In generative Al technology, by setting an image and text as an input image and an input prompt and using a generative model, it is possible to acquire an output such as text and an image or video that are highly likely to match a "context" expressed by the set input image and input prompt. A relationship between an inputted value and the "context" is something that the model acquires when learning using a large amount of images and text. Further, by changing an initial value mainly generated from a random number at the time of generation, it is possible to change the output.

Japanese Patent Laid-Open No. 2021-64061 proposes a technique for reducing the effort in document printing by listing candidates for a product based on a document to be printed and presenting setting items specified by the selection of the product to the user. Here, the setting items are settings related to a print format such as sheet size and layout displayed on a print preview screen, for example.

### SUMMARY

However, the above prior art has the following problems. For example, in the above prior art, product information needs to be prepared in advance, and product information that suits the document to be printed is selected from the prepared product list. Further, while the effort in settings related to a print format is reduced, it is necessary to manually find and set the part of the document that one wants to print.

The present disclosure enables realization of a new mechanism that facilitates print settings via generative Al.

The present disclosure in its first aspect provides a non-transitory computer-readable storage medium as specified in claim 1. Optional features are specified in claim 2 to 15.

The present disclosure in its second aspect provides an information processing apparatus as specified in claim 16.

The present disclosure in its second aspect provides a method as specified in claim 17.

Features of the present disclosure will become apparent from the following description of embodiments with reference to the attached drawings. The following description of embodiments are described by way of example.

### BRIEF DESCRIPTION OF THE DRAWINGS

FIG. 1 is a diagram illustrating an example of a configuration of a printing system related to document printing according to one embodiment.
FIG. 2 is a diagram illustrating an example of a hardware configuration of an image forming apparatus 100 according to one embodiment.
FIG. 3 is a diagram illustrating an example of a hardware configuration of a client PC 102 and a server PC 104 according to one embodiment.
FIG. 4 is a diagram illustrating an example of function blocks of the printing system according to one embodiment.
FIG. 5 is a diagram illustrating an example of generation processing.
FIG. 6 is a diagram illustrating an example of a document print screen in the client PC 102 according to one embodiment.
FIG. 7 is a diagram illustrating an example of prompt candidate presentation on a document print screen according to one embodiment.
FIG. 8 is a diagram illustrating an example of processing for reflecting print settings generated by generative Al in a document print screen according to one embodiment.
FIG. 9 is a diagram illustrating an example of processing for generating prompt candidates in a document print screen according to one embodiment.
FIG. 10 is a diagram illustrating an example of a generative Al service that takes device information into consideration in a document print screen according to one embodiment.
FIG. 11 is a diagram illustrating an example of print setting generation processing that takes device information into consideration in a document print screen according to one embodiment.
FIG. 12 is a diagram illustrating an example of a generative Al service that takes conversation style into consideration in a document print screen according to one embodiment.
FIG. 13 is a diagram illustrating an example of processing for generating print settings that take conversation style into consideration in a document print screen according to one embodiment.
FIG. 14 is a diagram illustrating an example of a document to be printed according to one embodiment.
FIG. 15 is a diagram illustrating an example of a generated print image according to one embodiment.

### DESCRIPTION OF THE EMBODIMENTS

Hereinafter, embodiments will be described in detail with reference to the attached drawings. Note, the following embodiments are not intended to limit the scope of the claims. Multiple features are described in the embodiments, but it is not the case that all such features are required, and multiple such features may be combined as appropriate. Furthermore, in the attached drawings, the same reference numerals are given to the same or similar configurations, and redundant description thereof is omitted.

### <First Embodiment>

### <Configuration of System>

A first embodiment according to the present disclosure will be described below. First, a configuration of a printing system according to the present embodiment will be described. The printing system according to the present embodiment is a printing system for an image forming apparatus. The printing system transmits a print job from an externally connected PC to the image forming apparatus. When generating a print job, an operation for editing print settings is performed as necessary on a screen of the PC.

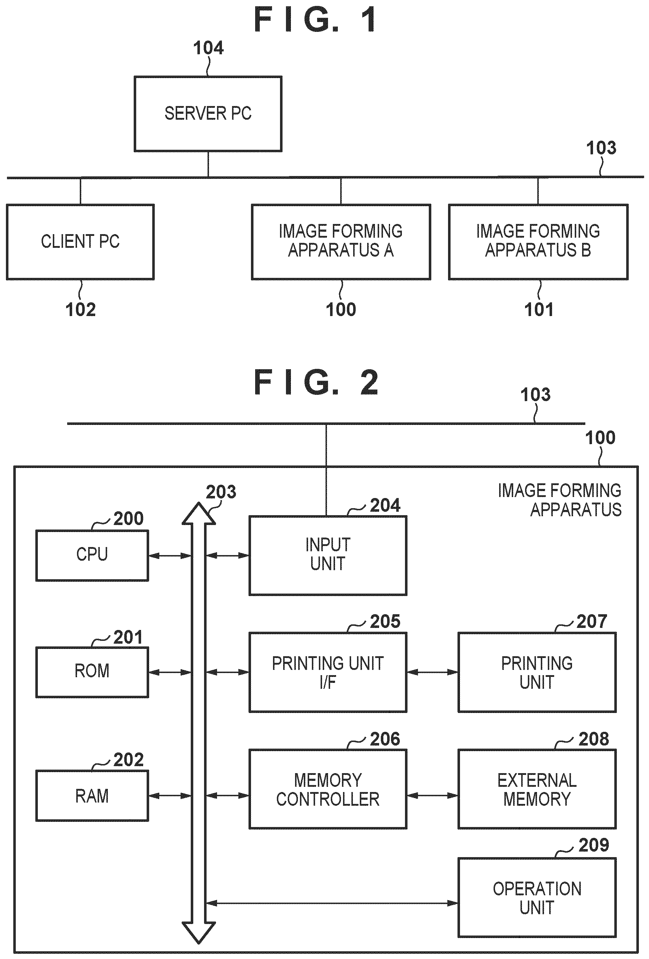

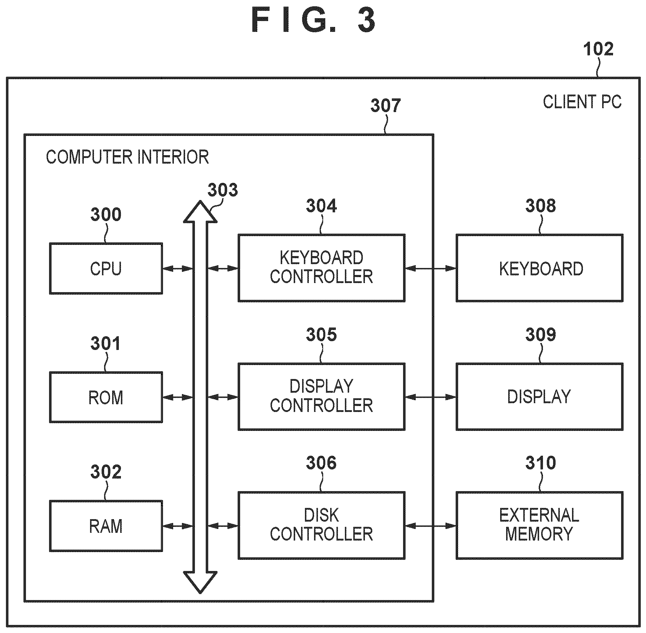

FIG. 1 illustrates an example of a configuration of a system in a network environment of the printing system according to the present embodiment. The printing system is configured to include image forming apparatuses 100 and 101, a client PC 102, and a server PC 104, and the respective apparatuses are connected so as to be capable of communicating with each other via a network 103. The client PC 102 and the server PC 104 are information processing apparatuses that have similar computer configurations. The detailed configurations of the information processing apparatuses will be described later with reference to FIG. 3.

The client PC 102 performs rendering processing on a print document to be printed, and acquires a print image. Further, the client PC 102 generates a print job by adding print settings to the print image, and inputs the print job to the image forming apparatus 100 or 101. Furthermore, when analyzing the content of the print document and generating print settings suitable for the print document, the client PC 102 requests the server PC 104 to implement processing. The server PC 104 is a generative Al server, and provides a generative Al service. The printing system according to the present embodiment has a form in which two image forming apparatuses are included, but is not limited thereto, and may include one, three, or more image forming apparatuses. There is one client PC and server PC, but there may be two or more client PCs and server PCs.

As an example of executing printing, in the present embodiment, a form in which a print job is transmitted from a printing application installed on the PC to the image forming apparatus 100 via a printer driver will be described. For example, on the client PC 102, a printing application and a printer driver are installed. The printing application can acquire the device information of the associated image forming apparatus 100, as well as printing parameters such as sheet type, sheet size, and printing quality, from the printer driver, and edit print settings from among the acquired parameters. By generating a print job based on the above print settings and the print image subjected to rendering processing in the client PC 102, and inputting the print job to the image forming apparatus via a spool of the printer driver, print processing is executed.

In the image forming apparatus, printing is executed based on the print settings of the received print job. Further, in the image forming apparatus, configuration information related to handled consumables, as well as status information such as an idle state and a printing error, are held as device information. Furthermore, when printing cannot be executed normally due to insufficient remaining consumables, a problem in the image forming apparatus, or an error in print settings, a reason why printing cannot be executed normally is presented to the user by displaying a warning message on a main body panel.

### <Hardware Configuration of Image Forming Apparatus>

An example of a hardware configuration of the image forming apparatus 100 according to the present embodiment will be described with reference to FIG. 2. Since the image forming apparatus 101 also has the same configuration, description will be omitted. The image forming apparatus 100 includes a CPU 200, a ROM 201, a RAM 202, an input unit 204, a printing unit I/F 205, a memory controller 206, a printing unit 207, an external memory 208, and an operation unit 209. The respective units can exchange data with each other via a system bus.

The image forming apparatus 100 is controlled by the CPU 200. The CPU 200 operates based on a control program or the like stored in a program ROM of the ROM 201 or a control program or the like stored in the external memory 208. The CPU 200 outputs an image signal as output information to the printing unit (printer engine) 207 connected to the printing unit I/F 205 via a system bus 203. The CPU 200 is capable of communication processing with the client PC 102 via the input unit 204 and can notify the client PC 102 of information in the image forming apparatus 100. Further, the CPU 200 can receive output data to be outputted to the printing unit 207 via the input unit 204.

The RAM 202 is a RAM that functions as a main memory, a work area, and the like of the CPU 200, and is configured such that the memory capacity can be expanded by an optional RAM connected to an expansion port (not illustrated). The RAM 202 is used as an output information expansion region, an environment data storage region, a non-volatile memory, and the like. The external memory 208, such as a hard disk (HDD) or an IC card, is accessed and controlled by the memory controller 206. The external memory 208 can be optionally connected, and stores font data, emulation programs, form data, remaining amount of consumables, information related to output sheet type and size, main body status information, and the like. Further, the operation unit 209 includes a panel, and can display various kinds of information.

### <Configuration of Information Processing Apparatus>

An example of a configuration of a computer of the client PC 102, which is an information processing apparatus according to the present embodiment, will be described with reference to FIG. 3. Since a computer of the server PC 104 has the same configuration as that of the computer of the client PC 102, description will be omitted. The client PC 102 includes a computer interior 307, a keyboard 308, a display 309, and an external memory 310. The computer interior 307 is configured to include a CPU 300, a ROM 301, a RAM 302, a keyboard controller 304, a display controller 305, and a disk controller 306. The respective units can exchange data with each other via a main bus 303.

The CPU 300 reads out various programs, such as control programs, system programs, and application programs, from the external memory 310 to the RAM 302 via the disk controller 306. The CPU 300 executes various programs read out to the RAM 302 to perform various kinds of data processing and display control of the display 309. The CPU 300 may read out a control program or the like from the ROM 301. The CPU 300 may be a dedicated circuit, such as an ASIC. The CPU 300 and a dedicated circuit are examples of a hardware circuit and a hardware processor. The disk controller 306 controls access to the external memory 310, such as an HD, a CD-ROM, a DVD-ROM, and a USB.

The RAM 302 is configured such that its capacity can be expanded by an optional RAM (not illustrated) or the like, and is mainly used as a work area of the CPU 300. The keyboard controller 304 controls key inputs from the keyboard 308 and a pointing device (not illustrated). The display controller 305 controls the display of the display 309. In the present embodiment, unless otherwise noted, the CPU 300 controls each unit connected to the main bus 303 via the main bus 303. The above-described configuration may also be similarly provided in the server PC 104. Of course, in the server PC 104, components that are not necessarily essential, such as the display 309, need not be included in the configuration.

### <Function Blocks>

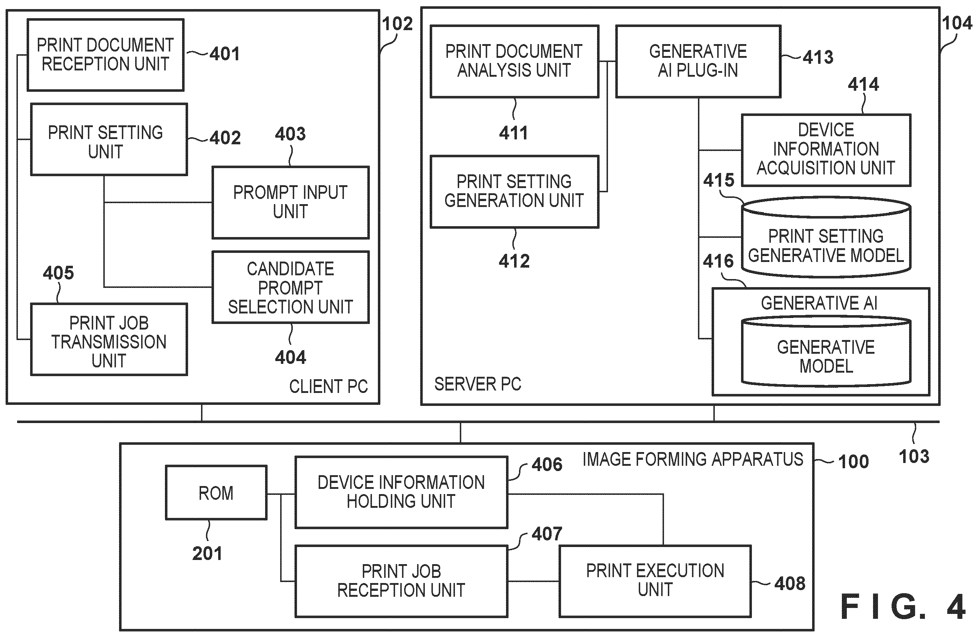

An example of function blocks of the printing system according to the present embodiment will be described with reference to FIG. 4. First, function blocks in the client PC 102 and the server PC 104 will be described.

The client PC 102 includes a print document reception unit 401, a print setting unit 402, a prompt input unit 403, a candidate prompt selection unit 404, and a print job transmission unit 405 as function blocks. Further, the server PC 104 includes a print document analysis unit 411, a print setting generation unit 412, a generative Al plug-in 413, a device information acquisition unit 414, a print setting generative model 415, and generative Al 416. In the print document reception unit 401, a print document is received. For example, upon receiving a request to print a file being edited from an application such as a document editor that is operating on the client PC 102, the print document reception unit 401 receives the file as a print document. In the print setting unit 402, a prompt, which is natural language inputted to the prompt input unit 403, and the print document are designated, and the print setting generation unit 412 of the server PC 104 is requested to perform processing.

In the print setting generation unit 412, print settings are generated by using the generative Al plug-in 413. In the generative Al plug-in 413, print setting items related to the inputted prompt are determined by the print setting generative model 415. An optimum value for each determined print setting item is generated from the document file by the generative Al 416. The generated optimum values are then interpreted by the print setting generative model 415 and translated into a corresponding value, as a print setting value. In the device information acquisition unit 414, device information is acquired from the image forming apparatus 100 and held. The held device information is used in the generative Al plug-in 413 when implementing proposals for print settings that take device information into consideration. The device information includes, for example, configuration information related to consumables handled by the corresponding image forming apparatus and status information such as an idle state and a printing error.

Further, in the candidate prompt selection unit 404 of the client PC 102, by designating the print document and requesting the print document analysis unit 411 of the server PC 104 to perform processing, a prompt, which is a candidate to be inputted to the prompt input unit 403, is generated and presented. In the print document analysis unit 411, similar to the print setting generation unit 412, the generative Al plug-in 413 is used to generate a print-related prompt (natural language) from the designated print document.

In the print job transmission unit 405 of the client PC 102, a print job is created, and the created print job is transmitted to the image forming apparatus 100. When creating a print job, print settings acquired from the print setting generation unit 412 of the server PC 104 and a print image subjected to rendering processing in the client PC 102 are consolidated.

Next, function blocks in the image forming apparatus 100 will be described. The ROM 201 stores a program and the like for implementing the function blocks, and the program and the like include a device information holding unit 406, a print job reception unit 407, and a print execution unit 408 as the function blocks. In the print job reception unit 407, a print job transmitted from the client PC 102 is received. In the print execution unit 408, print processing is executed on the print job. The configuration and remaining amount information of consumables mounted in the image forming apparatus 100, type and size information of output sheets, the main body status information of the image forming apparatus 100, and status information of the print job are held in the device information holding unit 406. As described above, these kinds of device information are acquired by the device information acquisition unit 414 of the server PC 104.

### <Processing of Generative Al>

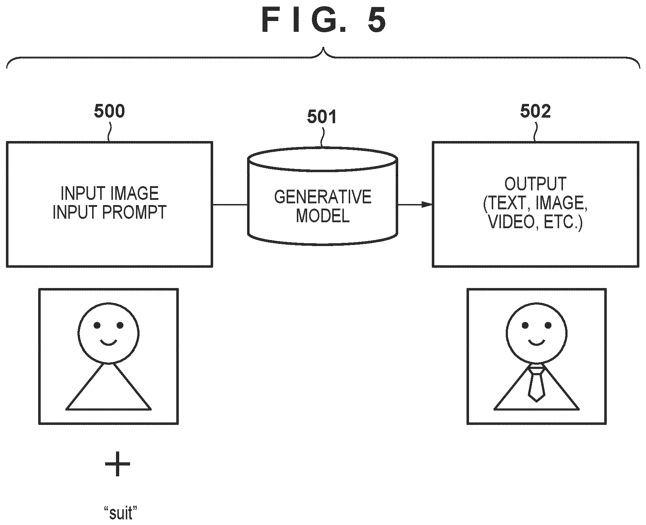

Here, an example of processing of the generative Al (generative AI) will be described with reference to FIG. 5. In generative Al technology, as illustrated in FIG. 5, an image and text (natural language) are inputted as an input image and input prompt 500 to a generative model 501. In the generative model 501, an output 502 such as text and an image or video that is highly likely to match a "context" expressed by the set input image and input prompt 500 is outputted. A relationship between an inputted value and the "context" is something that the model acquires when learning using a large amount of images and text. Further, by changing an initial value mainly generated from a random number at the time of generation, it is possible to change the output 502. In the printing system according to the present embodiment, a mechanism that facilitates print settings via such generative Al is provided. Details will be described below.

### <Document Print Screen>

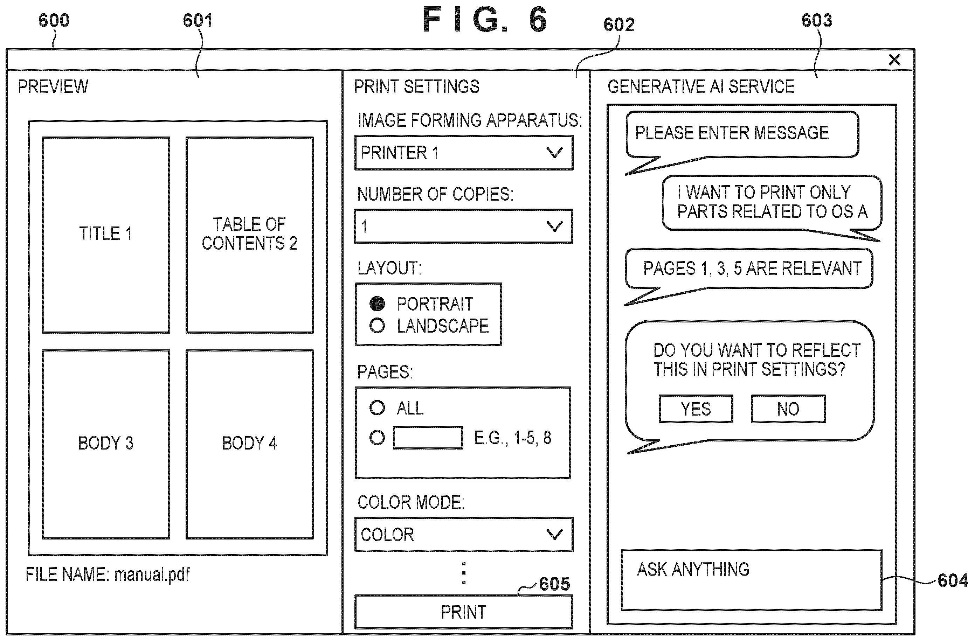

An example of a document print screen 600 for the image forming apparatus 100 displayed on the display 309 of the client PC 102 according to the present embodiment will be described with reference to FIG. 6. The document print screen 600 is an example of a setting screen, and is configured to include a print preview area 601, a print setting area 602, and a generative Al service area 603.

In the print preview area 601, a print image, which is a result of performing rendering processing on a print document received in the print document reception unit 401, is displayed. The print setting area 602 corresponds to a first region and displays setting items that can be set for the print setting unit 402 in an operable manner. For example, in the example of FIG. 6, a manual document is received as a print document, and when it is desired to print only description related to an OS A in the manual document, the user finds a relevant portion and sets relevant pages in a page setting item of the print setting area 602, for example. Further, if color printing is desired, a color mode selection is set to color.

The generative Al service area 603 corresponds to a second region for the user and the generative Al to interact with each other, and receives input information in natural language in a prompt input area 604 and inputs it to the prompt input unit 403. The prompt input area 604 is an example of a receiving unit. The input in natural language to the prompt input area 604 may be a text input from a keyboard or the like, (not illustrated), or may be a voice input via a microphone (not illustrated). Further, it is possible to view an exchange of prompts inputted in the past and information generated by the print setting generation unit 412, and select to reflect the generated information. When settings are reflected in the generative Al service area 603, the print preview and print setting values displayed in the print preview area 601 and the print setting area 602 are updated. For example, in the example of FIG. 6, natural language "I want to print only parts related to OS A" is inputted to the prompt input area 604. In response to the input, "Pages 1, 3, and 5 are relevant" is displayed, and a display object that allows selection of whether to reflect (update) the print settings is presented, and a response of the user is received. If "Yes" is selected according to the response of the user, only pages 1, 3, and 5 are displayed as print images displayed in the print preview area 601, and the value of the page setting item of the print setting area 602 is "1, 3, 5". Of course, a configuration may be taken so as to omit the confirmation of whether to reflect it in the print settings and automatically reflect it in the print settings.

In the example of FIG. 6, the relevant pages are proposed by the generative Al service, but as in the generation processing of FIG. 5, an image in which only the parts related to the OS A are consolidated may be generated, and the generated image may be displayed in the print preview area 601. In this case, it is desirable to inform the user by having the file name displayed at the bottom of the print preview area 601 indicate that it has been excerpted from the manual document, such as "manual.pdf (excerpted only regions related to OS A parts)". Further, a setting in which "all" is checked in the value of the page setting item of the print setting area 602 is conceivable.

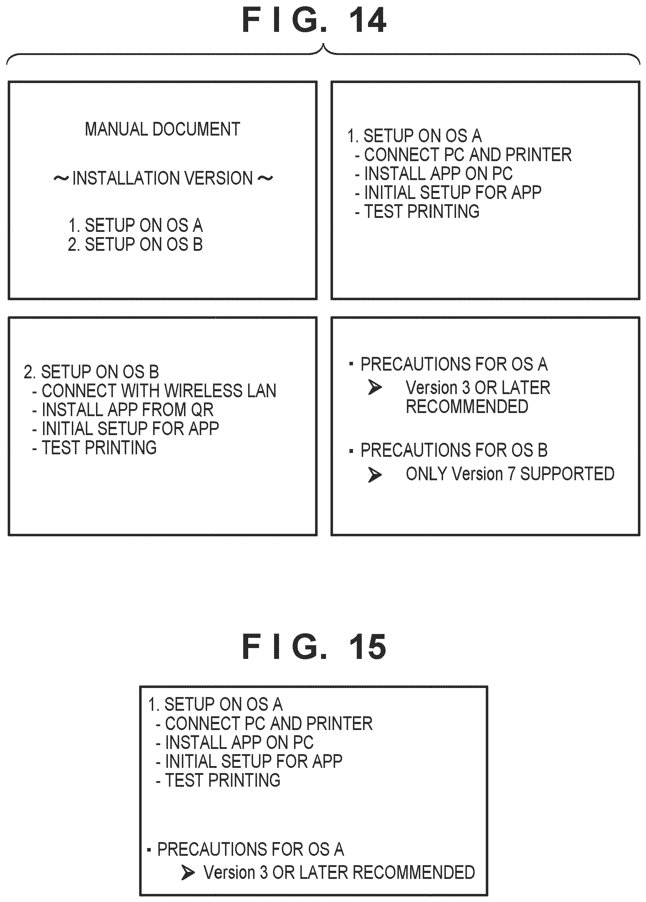

Specifically, for a document to be printed illustrated in FIG. 14, a print image as illustrated in FIG. 15 is generated, and an operation in which "all" is checked for the value of the page setting item is conceivable. In FIG. 14, four pages of a manual document are illustrated. If only regions related to OS A parts are excerpted from such a document, the result is the printed image illustrated in FIG. 15. In the printed image of FIG. 15 acquired by excerpting corresponding parts, an example in which parts excerpted from a plurality of pages are merged into a single page is illustrated, but there is no intention to limit the technology of the present disclosure, and parts excerpted from different pages may be respectively generated as different pages.

Further, even when geometric information, which is not a keyword written in a document, such as "I want to excerpt and print only graph parts from pages" is inputted, only graphs from respective pages may be excerpted or generated and a merged print image may be generated. The generated print image may be displayed in the print preview area 601.

When executing printing, by operating a print execution button 605, the print job transmission unit 405 is requested to create and transmit a print job related to the print document displayed in the print preview area 601 and the print setting area 602. The print job transmission unit 405 creates a print job and transmits the created print job to the target image forming apparatus.

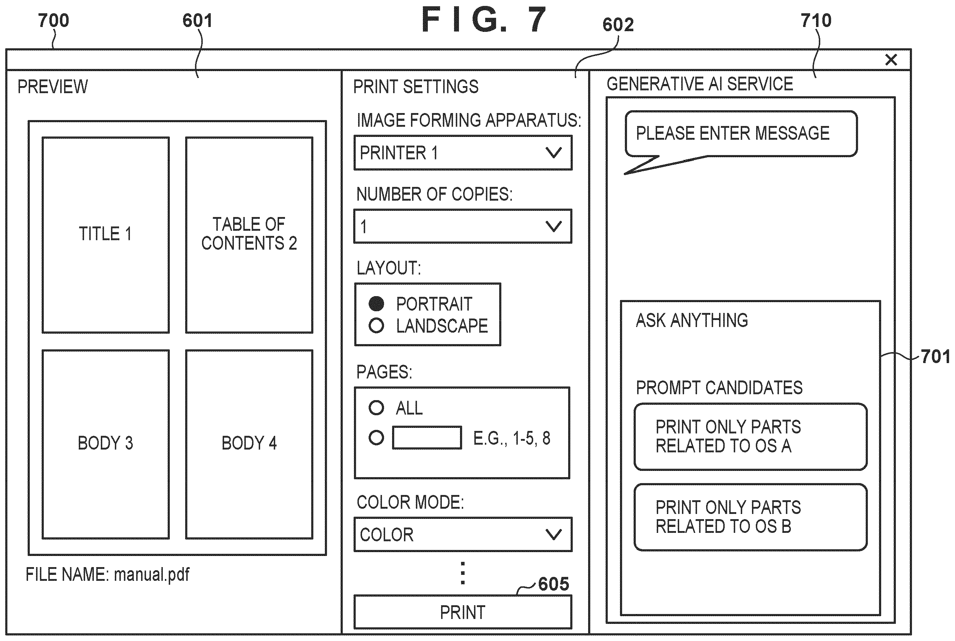

FIG. 7 illustrates a document print screen 700, which displays an Al service area 710, which includes a prompt candidate presentation area 701. Instead of receiving input of a message by the user in the generative Al service area 603 in the document print screen 600, for example, generative Al is used to predict candidate prompts and presenting them. In the document print screen 700, the display areas that are the same as those of the document print screen 600 are denoted by the same reference numerals.

In the prompt candidate presentation area 701, one or more prompts, which are selection candidates, are displayed. In FIG. 7, a prompt "print only parts related to OS A" and a prompt "print only parts related to OS B" are displayed in a selectable manner. The user can complete prompt input by selecting a desired prompt from the prompt candidates, and thus, effort can be reduced. The prompt candidates correspond to the prompt candidates generated by the print document analysis unit 411 and held in the candidate prompt selection unit 404. A prompt can be inputted to the prompt candidate presentation area 701, similar to the prompt input area 604. Thus, the user may select a presented prompt candidate or may input a prompt themselves.

### <Print Setting flow>

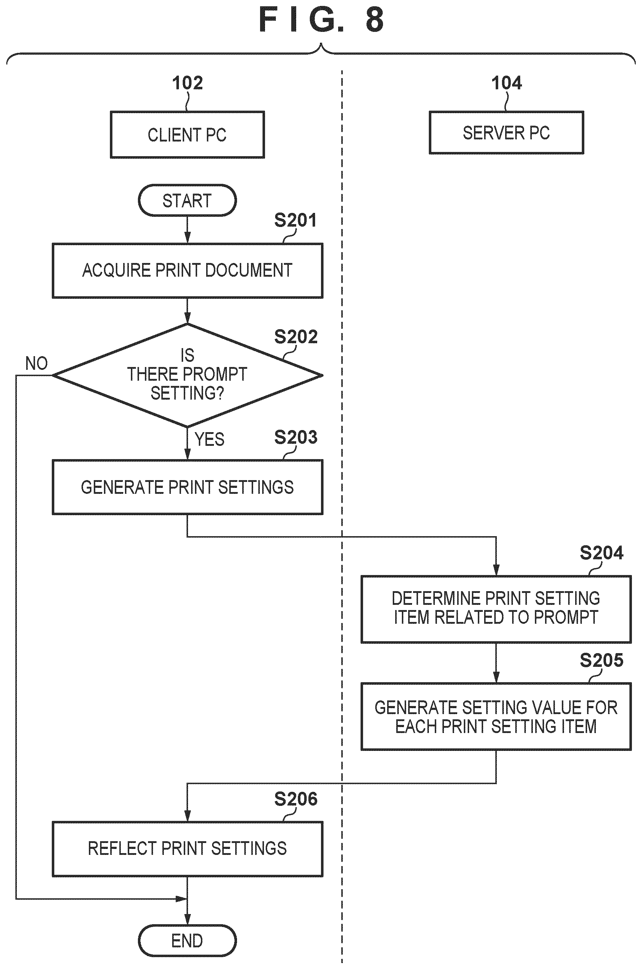

A processing procedure for reflecting (updating) print setting generated by generative Al in the document print screen 600 according to the present embodiment will be described with reference to FIG. 8. The processing to be described below is realized, for example, by the CPU 300 of each of the client PC 102 and the server PC 104 reading out a program stored in the ROM 301 to the RAM 302 and executing the program. In the client PC 102, the processing of this flowchart is started by the print setting unit 402 at a timing when input is made to the prompt input area 604 on the document print screen 600, for example.

First, in step S201, the print setting unit 402 acquires a print document received in the print document reception unit 401. Then, in step S202, the print setting unit 402 determines whether a prompt inputted to the prompt input unit 403 has been acquired. If a prompt has been acquired (Yes in step S202), the processing proceeds to step S203, and the print setting unit 402 requests the print setting generation unit 412 of the server PC 104 to perform processing for generating print setting values. Here, when requesting the generation of print settings, the print setting unit 402 transmits the print document and the information of the prompt to the print setting generation unit 412 (server PC 104). Meanwhile, if a prompt inputted to the prompt input unit 403 cannot be acquired (No in step S202), the processing of this flowchart ends.

In step S204, the print setting generation unit 412 designates the received print document and prompt for the generative Al plug-in 413. The generative Al plug-in 413 determines the print setting items to be generated, by using the print setting generative model 415. Then, in step S205, the generative Al plug-in 413 causes the generative Al 416 to generate setting values for each determined print setting item based on the print document, and translates the setting values generated by the print setting generative model 415 into values that can be set for corresponding print setting items. For example, in a monochrome-only printer, even if "color printing/booklet printing" is generated in step S204, it is switched to "monochrome/stapling" in step S205. In another example, even if "add a print mode with high print quality and durability" is generated in step S204, it is switched to "quality = high quality, fed sheet = matte paper" in step S205.

Then, in step S206, the print setting unit 402 of the client PC 102 acquires the setting value translated in step S205 for each print setting item determined in step S204 from the print setting generation unit 412 of the server PC 104, and reflects them on the document print screen 600. Then, the processing of this flowchart ends. Of course, the generated print setting values may include not only text, but also an image group or the like obtained by excerpting designated information in the document.

### <Presentation of Candidate Prompts>

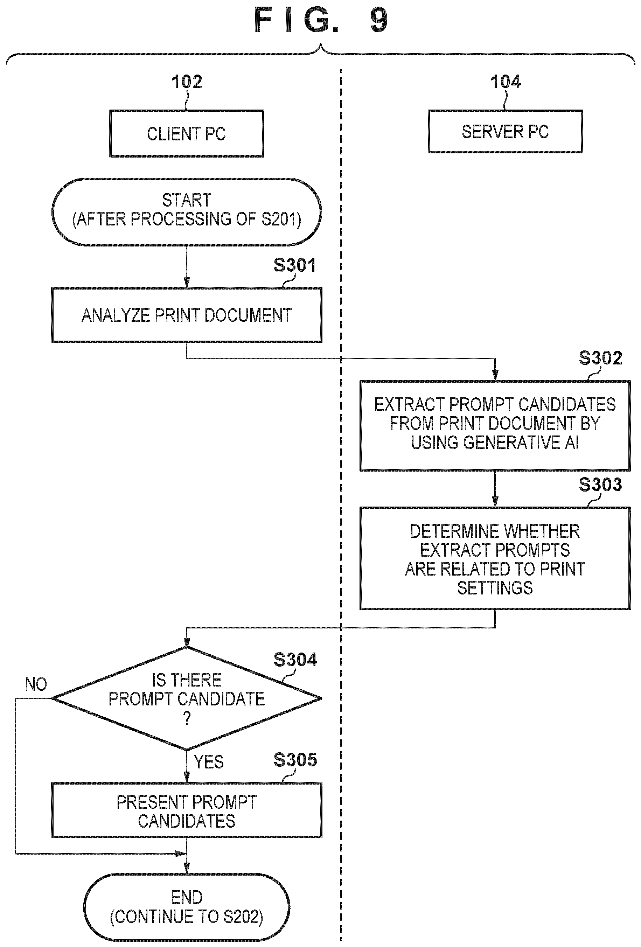

A processing procedure for generating prompt candidates when displaying the prompt candidate presentation area 701 of FIG. 7 in the prompt input area 604 will be described with reference to FIG. 9. The processing to be described below is realized, for example, by the CPU 300 of each of the client PC 102 and the server PC 104 reading out a program stored in the ROM 301 to the RAM 302 and executing the program. The processing of this flowchart is started after the processing of above step S201, for example.

In step S301, the print setting unit 402 requests the candidate prompt selection unit 404 to analyze the print document. The candidate prompt selection unit 404 requests the print document analysis unit 411 of the server PC 104 to perform print document analysis in which the generative Al plug-in 413 is used.

In step S302, the generative Al plug-in 413 extracts a prompt candidate for each print setting item by using the generative Al 416. Then, in step S303, the generative Al plug-in 413 determines whether extracted prompts are related to print settings by using the print setting generative model 415.

Then, in step S304, the candidate prompt selection unit 404 acquires the candidate prompts from the print document analysis unit 411 of the server PC 104 and determines whether there is a prompt candidate related to print settings. If there is a prompt candidate related to print settings (Yes in step S304), the processing proceeds to step S305, and the print setting unit 402 displays it in the prompt candidate presentation area 701, ends this flowchart, and proceeds to the processing of above step S202. Meanwhile, if there is no candidate (No in step S304), this flowchart is ended as is without doing anything, and the processing continues to step S202.

A case where the user directly indicates that they want to print to a generative Al service, such as Microsoft Copilot^{®}, without going through the document print screen 600 is conceivable. In such a case, the generative Al plug-in 413 may be called from the generative Al 416 to generate optimal print setting values, and then the document print screen 600 may be displayed. A screen in a state in which the print preview and print setting values displayed in the print preview area 601 and the print setting area 602 reflect the generated print setting values is generated and displayed.

As described above, a computer program according to the present embodiment causes a computer of the information processing apparatus to function as follows. That is, the information processing apparatus receives natural language related to a print setting; inputs the received natural language and a print target to generative Al, and acquires a print setting; based on the acquired print setting, proposes a print setting; and in response to a response to the proposal, reflects a print setting. According to the present embodiment, even if product information is not prepared in advance, when a request to print a document file is received, print settings that correspond to the document are dynamically generated in response to natural language related to print settings, thereby making it possible to effortlessly set the part that one wants to print in addition to the print format. Thus, according to the present embodiment, it is possible to provide a new mechanism that facilitates print settings via generative Al.

### <Second Embodiment>

A second embodiment according to the present disclosure will be described below. In the above first embodiment, for each print setting item supported in the image forming apparatus 100, a print setting value is generated based on a document to be printed and input information to the prompt input area 604. However, depending on the remaining amount information and the configuration of consumables mounted in the image forming apparatus 100 and the type and size information of output sheets, constraints may occur in the setting value for each supported print setting item. For example, even if the image forming apparatus supports color printing, if the remaining amount of yellow ink is low but all pages are printed in color, there is a risk that printing may fail due to lack of yellow ink. In such a case, it becomes necessary to propose to implement color printing for parts where color printing is recommended, and execute monochrome printing for parts where that is not the case.

### <Document Print Screen>

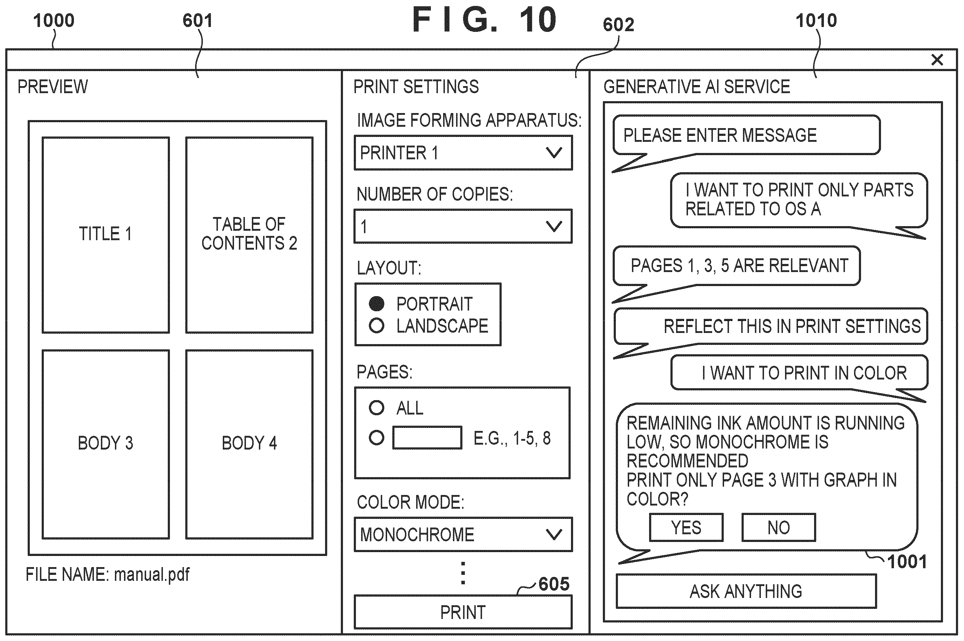

An example of a generative Al service that takes device information into consideration in a document print screen 1000 according to the present embodiment will be described with reference to FIG. 10. In the document print screen 1000, the display areas that are the same as those of the document print screen 600 are denoted by the same reference numerals.

In the document print screen 1000, a generative Al service area 1010 is displayed, and a proposal 1001 is presented in the area. In the proposal 1001 that takes device information into consideration, a recommended setting value is presented to the user based on information acquired by the device information acquisition unit 414. In the example of FIG. 10, since the remaining amount of ink for color is low, a proposal to execute color printing for only page 3, for example, is made. This is because only page 3 includes a display object, such as a graph or a chart, for example, for which color printing is recommended. Further, in the proposal 1001, a display object for selecting the proposal and a display object for rejecting the proposal are displayed in a selectable manner. When printing only page 3 in color, the print job is divided at page 3 where print settings change, and as a result, is divided into three jobs, page 1, page 3, and page 5.

### <Print Settings that Take Device Information into Consideration>

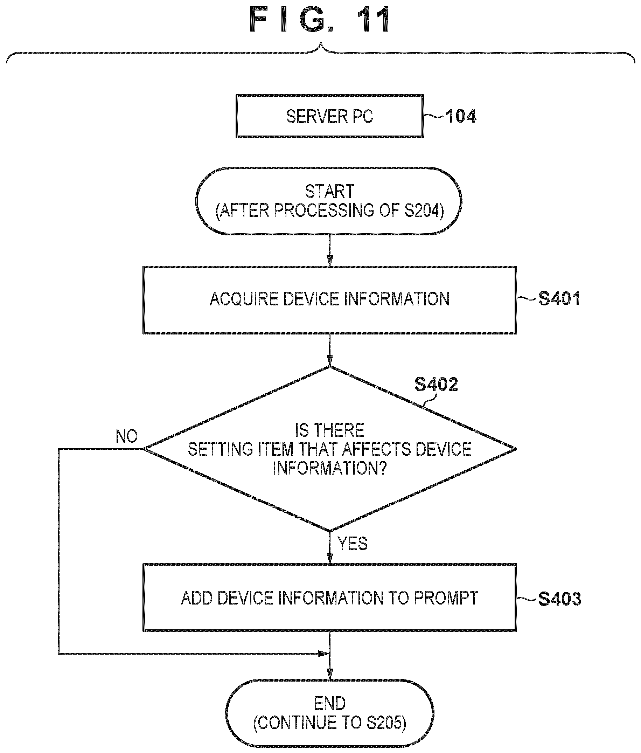

A processing procedure for print setting generation processing that takes device information into consideration in a document print screen according to the present embodiment will be described with reference to FIG. 11. The processing to be described below is realized, for example, by the CPU 300 of the server PC 104 reading out a program stored in the ROM 301 to the RAM 302 and executing the program. This flowchart is executed after above step S204 has been processed, for example, by the server PC 104.

In step S401, the device information acquisition unit 414 acquires information held in the device information holding unit 406 from the image forming apparatus 100. Then, in step S402, the generative Al plug-in 413 determines whether there is a setting item that affects the device information in the print setting items determined in step S204. If there is a setting item that affects the device information (Yes in step S402), the processing proceeds to step S403, and the generative Al plug-in 413 adds the device information to the inputted prompt, ends the processing of this flowchart, and continues to step S205. Meanwhile, when there is no setting item that affects the device information (No in step S402), the processing of this flowchart is ended as is without doing anything, and the processing continues to step S205.

In the example of FIG. 10, a proposal by the generative Al service that takes the remaining ink amount into consideration is implemented, but there is no intention to limit the technology of the present disclosure. For example, since the user wants print in color, a proposal "Please replace yellow ink in order to print all pages in color." may be made. In this case, if the user replaces the yellow ink, "Yellow ink has been replaced. Reflected this in print settings? Yes. No." is presented to the user. Of course, the generative Al service area 1010 may prompt to ink replacement during printing execution. Further, when there are a large number of setting items that affect the device information in step S402, the selection of another image forming apparatus (alternative image forming apparatus) may first be prompted in the generative Al service area 1010. In this case, if another image forming apparatus is actually selected, the flowchart of FIG. 8 is executed again.

### <Third Embodiment>

A third embodiment according to the present disclosure will be described below. In some generative Al services, a different result can be obtained by designating a conversation style when a prompt is read. For example, in Microsoft Copilot, a function for making a selection from three conversation styles, "more creative", "more balanced", and "more precise", and then designating a prompt for the generative Al service is provided. When it is desired to excerpt parts one wants to print as is from the document to be printed and print them, "more precise" is used. Meanwhile, when it is desired to generate and print a written discussion on the document to be printed, or when printing text converted into a figure such as a graph, "more creative" is used. Further, when it is desired to print the main points of the text, "more balanced" is used. If it can be determined what conversation style should be applied to the prompt designated by the prompt input unit 403 for each print setting item, a more accurate proposal can be made to the user. Therefore, in the present embodiment, print settings that take conversation style into consideration will be described.

### <Document Print Screen>

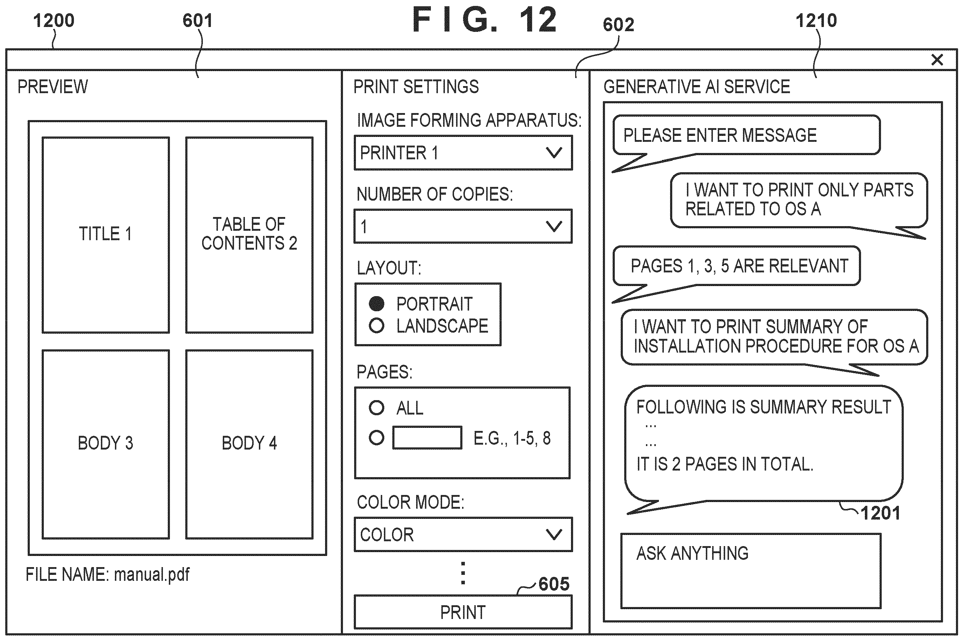

FIG. 12 describes an example of a generative Al service that takes conversation style into consideration in a document print screen 1200. In the document print screen 1200, the display areas that are the same as those of the document print screen 600 are denoted by the same reference numerals.

In the document print screen 1200, a generative Al service area 1210 is displayed, and a proposal 1201 that takes conversation style into consideration is presented in the area. In the proposal according to the present embodiment, when an input such as "I want to print only parts related to OS A" is performed in the prompt input area of the generative Al service area 1210, the generative Al service generates a result of extracting the corresponding parts by using "more precise" as a conversation style. Meanwhile, as illustrated in FIG. 12, a case where it is desired to print not the document itself but something that has been created from the document, such as "I want to print summary of installation procedure for OS A", is conceivable. In such a case, a result of illustrating text or a procedure created by using "more balanced" or "more creative" as the conversation style is generated for the generative Al service.

### <Print Settings that Take Conversation Style into Consideration>

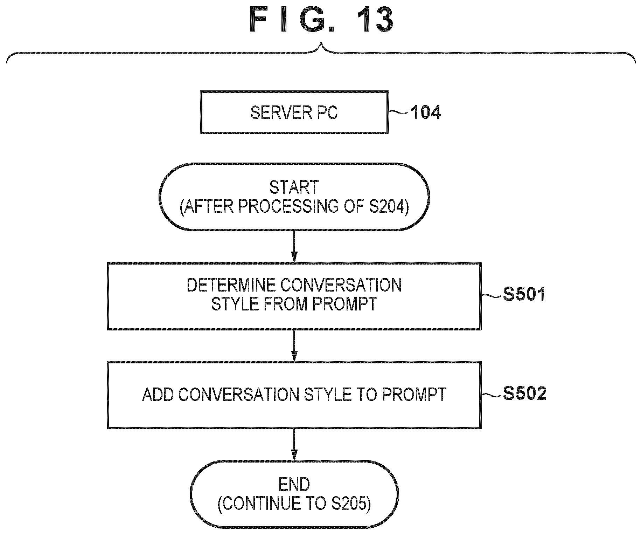

A processing procedure for print setting generation processing that takes conversation style into consideration in the document print screen 1200 according to the present embodiment will be described with reference to FIG. 13. The processing to be described below is realized, for example, by the CPU 300 of the server PC 104 reading out a program stored in the ROM 301 to the RAM 302 and executing the program. This flowchart is started after the processing of above step S204 has been executed by the server PC 104.

In step S501, the generative Al plug-in 413 determines a conversation style that corresponds to the inputted prompt. When determining a conversation style, for example, the print setting generative model 415 may be used, or determination may be made according to keywords included in the prompt. Alternatively, the user may be asked to make a selection. Then, in step S502, the generative Al plug-in 413 adds the conversation style determined in step S501 to the inputted prompt, ends the processing of this flowchart, and continues to step S205.

### <Modification>

The present disclosure is not limited to the above embodiments, and various modifications are possible. For example, in the above embodiments, an application for creating layout data is used as an example of the application. However, there is no intention to limit the technology of the present disclosure, and the present disclosure can be realized and is effective in any application that includes a similar image layout function.

Further, in the above embodiments, a personal computer is assumed as the information processing apparatus. However, there is no intention to limit the technology of the present disclosure, and the present disclosure can be realized in any information processing apparatus (terminal) that can be used in a similar method. For example, the technology of the present disclosure is applicable to mobile phones, portable information terminals, digital still cameras, digital video cameras, portable music players, games, set-top boxes, Internet home appliances, and the like. Further, in the above embodiments, an example in which Ethernet is used as an example of a configuration of the network has been described. However, there is no intention to limit the technology of the present disclosure, and any other network configuration, such as, a wireless LAN, IEEE 1394, and Bluetooth, for example, may be taken.

According to the present disclosure, it is possible to provide a new mechanism that facilitates print settings via generative Al.

### Other Embodiments

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)TM), a flash memory device, a memory card, and the like.

Various embodiments have been described in detail above but it will be understood that the present disclosure is not limited to these embodiments and encompasses all modifications, variants, alternatives and equivalents falling within the scope of the appended claims.

## Claims

1. A non-transitory computer-readable storage medium storing a computer program that causes a computer (300) of an information processing apparatus (102) to function to:
receive natural language related to a print setting (403);
acquire a print setting by inputting the received natural language and a print target to generative Al (402);
propose a print setting based on the acquired print setting (402, 403); and
update a print setting in response to a response to the proposal (402).

2. The storage medium according to claim 1, wherein
the computer program further causes the computer of the information processing apparatus to function to:
generate, based on the print target, one or more candidates for natural language related to a print setting, and present the one or more candidates (402, 404); and
receive the natural language related to the print setting in accordance with a selection of the one or more candidates (403, 404).

3. The storage medium according to claim 2, wherein
the computer program further causes the computer of the information processing apparatus to function to:
acquire the one or more candidates by inputting the print target to the generative Al, and present the acquired one or more candidates (404).

4. The storage medium according to claim 1, wherein
the computer program further causes the computer of the information processing apparatus to function to:
acquire device information of an image forming apparatus to which a print job is to be inputted (402); and
propose a print setting based on the acquired print setting and device information (402, 404).

5. The storage medium according to claim 4, wherein
the computer program further causes the computer of the information processing apparatus to function to:
change the print setting acquired from the generative Al in accordance with the device information, and propose the changed print setting (402, 404).

6. The storage medium according to claim 4, wherein
the computer program further causes the computer of the information processing apparatus to function to:
select, in accordance with the print setting acquired from the generative Al and the device information, an alternative image forming apparatus that executes printing, and propose the alternative image forming apparatus (402).

7. The storage medium according to claim 1, wherein
the computer program further causes the computer of the information processing apparatus to function to:
select a conversation style of the generative Al in accordance with content of the received natural language, and acquire the print setting (402).

8. The storage medium according to claim 7, wherein
the computer program further causes the computer of the information processing apparatus to function to:
select the conversation style of the generative Al by using the generative Al (402).

9. The storage medium according to claim 1, wherein
the computer program further causes the computer of the information processing apparatus to function to:
display a setting screen that includes at least a first region for performing a print setting and a second region for inputting natural language and interacting with the generative Al (402).

10. The storage medium according to claim 9, wherein
the computer program further causes the computer of the information processing apparatus to function to:
receive the natural language related to the print setting via the second region (402).

11. The storage medium according to claim 9, wherein
the computer program further causes the computer of the information processing apparatus to function to:
propose the print setting via the second region, and cause a display object, by which whether to update the print setting can be selected, to be displayed on the second region (402).

12. The storage medium according to claim 9, wherein
the computer program further causes the computer of the information processing apparatus to function to:
update a print setting displayed in the first region in accordance with a print setting to be updated (402).

13. The storage medium according to claim 9, wherein
the computer program further causes the computer of the information processing apparatus to function to:
display, on the setting screen, a third region in which a print preview for a case where printing is performed in accordance with a print setting is displayed (402).

14. The storage medium according to claim 13, wherein
the computer program further causes the computer of the information processing apparatus to function to:
when the print setting is updated, update display of the print preview in accordance with the updated print setting (402).

15. The storage medium according to claim 9, wherein
the computer program further causes the computer of the information processing apparatus to function to:
when execution of printing is instructed, generate a print job according to the updated print setting, and input the print job to a corresponding image forming apparatus (405).

16. An information processing apparatus (102) comprising:
receiving means (300) for receiving natural language related to a print setting;
acquiring means (300) for acquiring a print setting by inputting the received natural language and a print target to generative Al;
proposing means (300, 309) for proposing a print setting based on the acquired print setting; and
updating means (300) for updating a print setting in response to a response to the proposal.

17. A method of controlling an information processing apparatus (102), the method comprising:
receiving natural language related to a print setting (403);
acquiring a print setting by inputting the received natural language and a print target to generative Al (402);
proposing a print setting based on the acquired print setting (402, 403); and
updating a print setting in response to a response to the proposal (402).
